Europäisches Patentamt

(19) European Patent Office

Office européen des brevets

(11) Veröffentlichungsnummer: **0 054 276**

**A1**

(12) # EUROPÄISCHE PATENTANMELDUNG

(21) Anmeldenummer: 81110363.9

(22) Anmeldetag: 11.12.81

(51) Int. Cl.³: **F 16 M 9/00**
**E 02 D 27/44**

(30) Priorität: 12.12.80 DE 3046986

(43) Veröffentlichungstag der Anmeldung:
23.06.82 Patentblatt 82/25

(84) Benannte Vertragsstaaten:
AT CH FR GB IT LI

(71) Anmelder: EMAG MASCHINENFABRIK GMBH
Austrasse 24
D-7335 Salach/Württ.(DE)

(72) Erfinder: Metz, Rudi
Dr. Frey-Strasse 50
D-7322 Donzdorf(DE)

(74) Vertreter: Zmyj, Erwin, Dipl.-Ing.
Postfach 95 04 28
D-8000 München 95(DE)

(54) **Verfahren und Vorrichtung zum Herstellen von aus synthetischem Beton bestehenden Maschinenteilen sowie diese Maschinenteile, insbesondere Maschinenständer für Werkzeugmaschinen.**

(57) Es wird eine Blechhaut (3) verwendet, die am fertigen Maschinenteil verbleibt und seine äußere Form bestimmt. Während des Einbringens des Betons in die durch die Blechhaut bestimmte Form und insbesondere während des Verdichtens des Betons wird die Blechhaut an ihrer Außenseite vollflächig mittels eines fließ- oder rieselfähigen Mediums (6), vorzugsweise Sand, abgestützt. Die Blechhaut (3) bildet nicht nur einen äußeren Schutz für den Beton sondern dient gleichzeitig als Konstruktionsteil zur Aufnahme von Zugkräften im Betriebszustand. Zur Herstellung der Maschinenteile wird die durch die Blechhaut (3) gebildete Form in einen Formkasten (2) mit allseitigem Abstand eingehängt und mittels einer fließfähigen oder rieselfähigen Masse (6) abgestützt. Der Formkasten (2) wird auf einen Rütteltisch (1) aufgesetzt.

Verfahren und Vorrichtung zum Herstellen
von aus synthetischem Beton bestehenden
Maschinenteilen sowie diese Maschinenteile,
insbesondere Maschinenständer für Werkzeugmaschinen

Die Erfindung bezieht sich auf ein Verfahren zum
Herstellen von aus synthetischem Beton bestehenden
Maschinenteilen, insbesondere Maschinenständer für
Werkzeugmaschinen, bei welchem die Ausgangsstoffe
für den Beton in eine Form gefüllt und verdichtet
werden.

Die Erfindung bezieht sich auch auf eine Vorrichtung
zur Durchführung des Verfahrens sowie auf Maschinenteile aus synthetischem Beton, insbesondere Maschinenständer für Werkzeugmaschinen.

Maschinenteile, insbesondere Maschinenständer für
Werkzeugmaschinen aus synthetischem Beton sind bekannt.
Zu ihrer Herstellung verwendet man spezielle Formen,
in welche die Ausgangsstoffe für den synthetischen
Beton eingefüllt werden. Solche Formen sind sehr
kostspielig und deshalb ist ihre Herstellung nur dann
gerechtfertigt, wenn eine größere Stückzahl der entsprechenden Maschinenteile mit einer solchen Form
hergestellt werden kann.

Aufgabe der Erfindung ist es, die Herstellung von Maschinenteilen, insbesondere Werkzeugmaschinenständer aus Beton
auch für den Fall bei geringem Aufwand zu ermöglichen,
in welchem nur geringe Stückzahlen herzustellen sind und
deshalb eine stabile Form wegen der zu hohen Kosten nicht in Frage kommt. Weiterhin ist es Aufgabe der Erfindung
eine so exakte Positionierung von in den Beton einzubettender bereits bearbeiteter Teile zu ermöglichen,
daß diese nach dem Aushärten des Betons nicht mehr nachgearbeitet werden müssen. Weiterhin sollen Maschinenteile
und insbesondere Werkzeugmaschinenständer aus Beton geschaffen werden, die einen zusätzlichen mechanischen
Schutz und eine Verstärkung an ihrer Oberfläache aufweisen.

Das erfindungsgemäße Grundprinzip, welches sich aus
Anspruch 1 ergibt ist darin zu sehen, daß man eine verhältnismäßig billig herzustellende Blechhaut mit den
Konturen des herzustellenden Maschinenteiles verwendet,
die in einen auf einem Rütteltisch stehenden Universalformkasten eingehängt wird, welcher mit einem sich der
Form der Blechhaut leicht anpassenden fließfähigen oder
rieselfähigen Medium ausgefüllt wird, das sämtliche durch
das Einfüllen des Betons in die als Form wirkende dünne
Blechhaut entstehenden Kräfte aufnimmt, wodurch es überhaupt erst ermöglicht wird mit einer sehr dünnen Blechhaut auszukommen, welche am Maschinenteil als verlorene
Form verbleiben kann. Hieraus ist ersichtlich, daß der
wesentliche Vorteil des erfindungsgemäßen Verfahrens
darin besteht, daß man mit einer verhältnismäßig billig
herzustellenden Form auskommt, die wegen ihrer geringen
Kosten am herzustellenden Werkstück verbleiben kann.

In Weiterbildung der Erfindung kann als abstützendes
Medium trockener oder angefeuchteter Sand verwendet werden.

Die Verwendung einer Blechhaut, welche am fertigen Werkstück, d. h. an dem herzustellenden Maschinenständer verbleibt, bringt außerdem noch den Vorteil mit sich, daß solche Teile, die als Metallteile in die Betonmasse eingelassen werden, weil sie bestimmte Auflagen oder Befestigungsunterlagen bilden sollen, an der Blechhaut fixiert werden können, so daß sie sich nach dem Aushärten der Betonmasse mit einer solchen Exaktheit an der vorbestimmten Stelle befinden, daß diese Teile bereits vor dem Einbringen in die Form fertig bearbeitet werden können. Selbstverständlich ist es auch möglich die Bearbeitung noch nach dem Aushärten des Betons vorzunehmen.

Ein wesentlicher Vorteil der am fertigen Maschinenteil verbleibenden Blechhaut besteht darin, daß diese Blechhaut gleichzeitig als Konstruktionselement zur Aufnahme von Zugkräften im Betriebszustand des entsprechenden Maschinenteiles dient. Die Dicke der Blechhaut, die eine außenliegende Armierung des Betons bildet, kann den auftretenden Belastungen entsprechend angepaßt werden.

Aus Beton bestehende Maschinenständer haben den Vorteil, daß sie bei gleicher Festigkeit wie Metallständer eine wesentlich höhere Dämpfung besitzen. Durch die erfindungsgemäße Verwendung von verlorenen Formen erhalten diese Maschinenteile auch noch zusätzlich einen mechanischen Schutz.

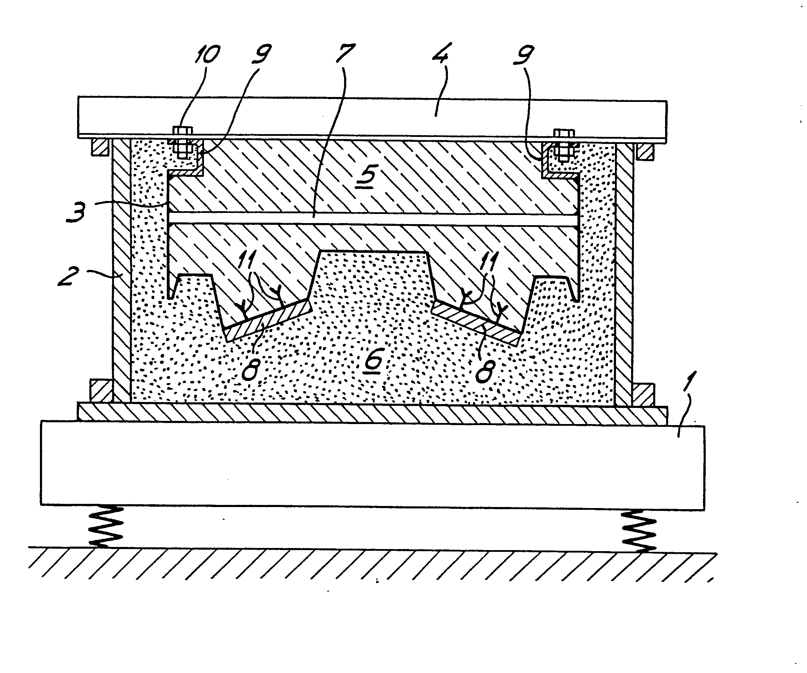

Weitere Merkmale, Vorteile und Ausgestaltungen der Erfindung ergeben sich aus den Unteransprüchen in Verbindung mit der Beschreibung und der Zeichnung, in welcher die Erfindung beispielsweise dargestellt ist.

Die einzige Figur zeigt einen Schnitt durch einen Formkasten mit darin befindlichem Maschinenständer.

Wie aus der Zeichnung ersichtlich, ist auf einem Rütteltisch 1 ein Universalformkasten 2 aufgesetzt, in welchen eine Blechhaut 3 mit allseitigem Abstand zu diesem an Trägern 4 eingehängt ist. Die Blechhaut 3 bestimmt die äußere Form eines herzustellenden Maschinenständers 5. Da die Blechhaut 3, welche die Gießform für den herzustellenden Maschinenständer 5 bildet, dünn sein kann wird zur allseitigen und gleichmäßigen Abstützung dieser Form der Formkasten 2 mit Sand 6 aufgefüllt und zwar in der Weise, daß die allseitig mit Abstand zu den Wänden des Formkasten gehaltene Blechhaut 3 an allen ihren Stellen gleichmäßig durch den Sand abgestützt wird, so daß dieser die beim Einfüllen des Betons und beim anschließenden Rüttelvorgang entstehenden Kräfte aufnimmt, wodurch die Blechhaut 3 trotz ihrer geringen Wandstärke nicht verformt wird.

An der Blechhaut 3 können innenseitig Verstärkungen 7 in Form von Stäben vorgesehen sein, die einerseits die Blechhaut bei der Herstellung des Maschinenteils verstärken und andererseits nach der Aushärtung des Betons als Verstärkung desselben dienen. Weiterhin können mit 8 bezeichnete Platten an der Blechhaut 3 vor dem Einfüllen des Betons fixiert sein, die entweder bereits schon fertig bearbeitet sind oder nach dem Aushärten des Betons noch nachbearbeitet werden. Solche während des Herstellungsvorgangs bereits gleich mit eingegossenen Metallteile können beispielsweise eine Aufschraubbasis für weitere am Maschinenständer anzubauende Maschinenteile bilden. Die Platten 8 sind durch an ihnen befestigte Anker 11 im Beton verankert und bilden eine Verdickung der Blechhaut.

Die Herstellung der Maschinenteile erfolgt in der Weise, daß die Blechhaut 3 mittels nach innen ragender Flansche 9 an den Trägern 4 mittels Schrauben 10 befestigt und in den Formkasten 2 so eingehängt wird, daß die Blechhaut 3 zu den Wänden des Formkastens 2 einen allseitigen Abstand aufweist, wobei die Träger 4 auf dem Formkasten aufruhen. Nach dem Ausfüllen des Zwischenraumes zwischen Formkasten und Blechhaut mit Sand, wobei dieser im trockenen Zustand oder im angefeuchteten Zustand eingefüllt wird, können
die Bestandteile des synthetischen Betons, welcher aus
einem Gemenge von Sand, Kies und Kunststoff besteht,
in die als Form dienende Blechhaut 3 eingefüllt werden,
worauf der Rütteltisch zur Verdichtung der Betonmasse
in Gang gesetzt wird. Nach dem Aushärten des Betons ist
das Werkstück fertig, es sei denn, daß bestimmte Teile
mit eingegossen worden sind, die nach dem Aushärten des
Betons noch bearbeitet werden müssen. Die Blechhaut 3
verbleibt als verlorene Schalung an dem hergestellten
Werkstück und bestimmt so nicht nur seine äußere Form
sondern stellt auch noch darüberhinaus einen gewissen
mechanischen Schutz und eine mechanische Verstärkung
für die Betonmasse dar.

0054276

- 6 -

<u>Patentansprüche</u>

1. Verfahren zum Herstellen von aus synthetischem Beton bestehenden Maschinenteilen, insbesondere Maschinenständer für Werkzeugmaschinen, bei welchen die Ausgangsstoffe für den Beton in eine Form gefüllt und verdichtet werden, dadurch g e k e n n z e i c h n e t , daß als Form eine am fertigen Maschinenteil verbleibende dünne Blechhaut verwendet wird, die während des Einbringens und Verdichtens des Betons an ihrer Außenseite vollflächig mittels eines fließ- oder rieselfähigen Mediums abgestützt wird.

2. Vorrichtung zur Durchführung des Verfahrens nach Anspruch 1, dadurch g e k e n n z e i c h n e t , daß auf einem Rütteltisch (1) ein Formkasten (2) angeordnet ist, auf welchem Träger (4) aufliegen, an denen eine, die äußere Form des herzustellenden Maschinenteils (5) bestimmende Blechhaut (3) mit allseitigem Abstand zum Formkasten (2) aufgehängt ist und daß der Zwischenraum zwischen Formkasten (2) und Blechhaut (3) mit einer verformbaren rieselfähigen oder fließfähigen Masse (6) ausgefüllt ist.

3. Vorrichtung nach Anspruch 2, dadurch g e k e n n - z e i c h n e t , daß zur Abstützung der Blechhaut (3) trockener oder angefeuchteter Sand dient.

4. Maschinenteil, insbesondere Maschinenständer für Werkzeugmaschinen aus synthetischem Beton, dadurch g e - k e n n z e i c h n e t , daß seine Form durch eine an der Außenseite verbleibende als verlorene Schalung dienende Blechhaut (3) bestimmt ist, die gleichzeitig als Konstruktionsteil zur Aufnahme von Zugkräften im Betriebszustand dient.

5. Maschinenteile nach Anspruch 4, dadurch g e k e n n - z e i c h n e t , daß die Blechhaut (3) mit Verstärkungen (7, 8) versehen ist, die gleichzeitig eine Verstärkung des Betons bilden.

6. Maschinenteil nach Anspruch 5, dadurch g e k e n n - z e i c h n e t , daß als Verstärkungen Platten (8) dienen, die in die Blechhaut eingesetzt und mit dem Beton verankert sind.

7. Maschinenteil nach Anspruch 6, dadurch g e k e n n - z e i c h n e t , daß die Platten (8) bereits fertig bearbeitet sind.

8. Maschinenteil nach Anspruch 6, dadurch g e k e n n - z e i c h n e t , daß die Platten unbearbeitet sind.

1/1

# Europäisches Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | DE - A - 2 610 737 (KOHLER)<br>* Seite 10, Zeile 13 - Seite 12, Zeile 15; Figuren * | 1 |
| | -- | |
| A | DE - A - 2 327 310 (OSAKA)<br>* Seite 3, Zeilen 8-11; Figur 2 * | 1 |
| | -- | |
| A | DE - A - 2 722 180 (SCHENK) | |
| A | CH - A - 371 035 (CAMENZIND) | |
| A | FR - A - 2 402 039 (STUDER) | |
| | ----- | |

**KLASSIFIKATION DER ANMELDUNG (Int. Cl.³)**

F 16 M 9/00
E 02 D 27/44

**RECHERCHIERTE SACHGEBIETE (Int. Cl.³)**

F 16 M
E 02 D
B 29 C

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

X  Der vorliegende Recherchenbericht wurde für alle Patentansprüche erstellt.

| Recherchenort | Abschlußdatum der Recherche | Prüfer |
|---|---|---|
| Den Haag | 08-03-1982 | NADELHOFFER |

EPA form 1503.1   06.78